Europäisches Patentamt

(19) European Patent Office

Office européen des brevets

(11) Publication number: **0 183 907**
**B1**

# (12) EUROPEAN PATENT SPECIFICATION

(45) Date of publication of patent specification: 16.08.89

(21) Application number: 85107786.7

(22) Date of filing: 24.06.85

(51) Int. Cl.⁴: **B 23 Q 3/155**

(54) Insert cartridge and toolholder for automatic insert changer.

(30) Priority: 07.12.84 US 679481

(43) Date of publication of application:
11.06.86 Bulletin 86/24

(45) Publication of the grant of the patent:
16.08.89 Bulletin 89/33

(84) Designated Contracting States:
AT BE CH DE FR GB IT LI NL SE

(56) References cited:
EP-A-0 044 914
EP-A-0 052 023
DE-A-2 619 939
US-A-3 368 265

Patent Abstracts of Japan, unexamined
applications, M field, vol. 5, no. 183, November
21, 1981

(73) Proprietor: KENNAMETAL INC.
One Lloyd Avenue P.O. Box 231
Latrobe Pennsylvania 15650 (US)

(72) Inventor: Erickson, Robert A.
1005 Pebblebrook Drive
Raleigh North Carolina 27609 (US)

(74) Representative: Leiser, Gottfried, Dipl.-Ing. et al
Patentanwälte Prinz, Leiser, Bunke & Partner
Manzingerweg 7
D-8000 München 60 (DE)

Courier Press, Leamington Spa, England.

## Description

The present invention relates to a toolholder and to an insert storage magazine of the type defined by the pre-characterizing portions of claims 1 and 6, respectively, and to a method of replacing a cutting insert.

Generally, the present invention is concerned with the automatic changing of cutting inserts on toolholders when they become damaged or worn during a machining cycle.

In the machining of materials utilizing toolholders with replaceable cutting inserts, a great deal of work has been done in trying to make the machining process a very efficient one. One of the inefficiencies of the machining system concerned the changing of the cutting insert when it became dull or worn, and even more importantly, the changing of the cutting insert when it fractured during the machining cycle.

When the insert can no longer be used in the cut, it is necessary to back the toolholder out from the workpiece and either index the cutting insert to another cutting edge or replace it in its entirety. This is usually done by the operator coming in and unclamping the insert with regular or special tooling, picking up the hot insert, utilizing gloves or other special equipment, and indexing or replacing the insert without introducing too much contamination, dirt or debris to the insert seat.

The insert can then be clamped by the operator and the toolholder returned to the workpiece for a test cut to determine if the new cutting edge has the same dimensional cutting ability as the previous cutting edge. If not, the machine tool must be readjusted so as to make up for any tolerancing differences.

In addition to the insert becoming dull and worn, the more catastrophic situation, and the most inefficient, from the standpoint of machining systems, occurs when the end of the life of the insert happens through breakage while the insert is still involved in the cutting of the workpiece. This situation can lead to severe damage, which may cause the scrapping of the workpiece, in addition to the lost time and other things associated with the changing of the insert.

More recently, studies have indicated that there are systems which may measure when a cutting insert is reaching the end of its useful life. When this occurs, a signal may be generated, indicating that the insert should be changed rather than risk any further machining operations.

A toolholder enabling an automatic insert change is disclosed in DE—A—2 619 939. The toolholder shown therein has a shank with an insert pocket on the outer end thereof. The insert seat has a pin which extends upwardly for engagement with a central hole in a cutting insert. The shank is slidable with the insert seat between a first position in which the insert seat is in the insert pocket and a second position in which the insert seat is located beneath the open end of an insert storage magazine. The insert storage magazine has an insert storage chamber for holding a supply of similarly shaped cutting inserts having a central hole therethrough in a face-to-face stacked relationship. A spring is provided for urging the stacked inserts into an abutting relationship with each other and with the face of the shank which closes the open bottom of the storage chamber.

The present invention proceeds from the prior art represented by DE—A—26 19 939 and aims at providing improvements thereover.

According to the present invention, a toolholder is provided which is defined in claim 1.

According to another aspect of the invention, an insert storage magazine is provided which is defined in claim 6.

According to a further aspect of the invention, a method of replacing a cutting insert is provided which is defined in claim 5.

The invention thus provides an automatic insert changer which becomes operative whenever a signal has been generated indicating that the cutting insert has completed its useful life, permitting long periods of unattended machining operations.

With the toolholder and insert storage magazine of the invention inserts may, one at a time, be slid in or out of the insert storage chamber of the magazine.

On the open end of the storage chamber, there is a longitudinal abutment surface to hold the stacked inserts longitudinally in the storage chamber. On the other end of the storage chamber, from the abutment surface, is a spring arrangement for urging the inserts toward the abutment surface.

A central rod extends through the storage chamber and engages central holes in the inserts stored therein. A rod means is connected to the spring means and has longitudinal reciprocal movement with one end of the rod extending to the open end of the storage chamber and engaging the central hole in the endmost insert.

According to a specific embodiment of the toolholder a drawbar extends through the shank of the toolholder and is connected with a means for moving the insert seat forwardly and rearwardly in the insert pocket. When the seat is moved rearwardly in the insert pocket, the pin engaging the center hole of the insert will clamp the insert between the pin and the side wall of the insert pocket.

In addition to clamping the insert against one side wall of said pocket, an additional pivotal clamp has been furnished along another side wall of the pocket, with the clamp having an insert side wall contact portion and an insert top wall contact portion. As the insert is moved into the insert pocket, a side wall of the insert contacts the insert side wall contact portion of the abutment clamp, causing it to pivot downwardly with the insert top wall contact portion firmly pressing down on the insert.

Preferably, the drawbar mechanism comprises a movable rod extending through the shank of the insert, and the rod connects with a rack and pinion arrangement to move the insert seat so that, when the drawbar is pulled or pushed rearwardly on the toolholder, the insert seat is moved forwardly out of the insert pocket. The movable rod means in the shank of the toolholder also, preferably, has means urging it to its forwardmost position within the toolholder.

According to the method of replacing a used or worn cutting insert on the toolholder described above the used insert on the toolholder is unclamped by moving the insert seat forwardly in the toolholder pocket and removing the insert from the insert seat. The insert mechanism is then positioned in proper alignment with the insert seat and further engaged with the insert seat so that the upstanding pin on the insert seat mates with the center hole of the insert in the open end of the storage chamber and pushes the central rod rearwardly in the storage chamber.

The method then comprises pushing the drawbar and the toolholder shank inwardly so that the insert seat moves into its clamping position in the toolholder pocket, thereby taking with it the insert formerly located in the endmost position of the storage area of the insert mechanism. The insert mechanism is then moved back to its original position out of the way of the machining efforts.

Brief Description of the Drawings

The exact nature of the present invention will become more clearly apparent upon reference to the following detailed specification taken in connection with the accompanying drawings in which:

Figure 1 shows a side view of the toolholder according to the present invention.

Figure 2 shows a side view with a partial cutaway of the insert cartridge according to the present invention.

Figure 3 shows a top view with a partial cutaway of the toolholder according to the present invention with the insert in its clamped position.

Figure 4 shows a top view with a partial cutaway of the toolholder according to the present invention with the insert in its unclamped position.

Figure 5 is a front view of the toolholder of the present invention with the insert in its clamped position.

Figure 6 is a front view of the toolholder of the present invention with the insert in its unclamped position.

Figure 7 is a toolholder of the present invention with the insert cartridge in proper alignment above the toolholder of the present invention.

Figure 8 is a cut away top view of the toolholder according to the present invention.

Figure 9 is a cut away top view of the toolholder according to the present invention.

Detailed Description of the Invention

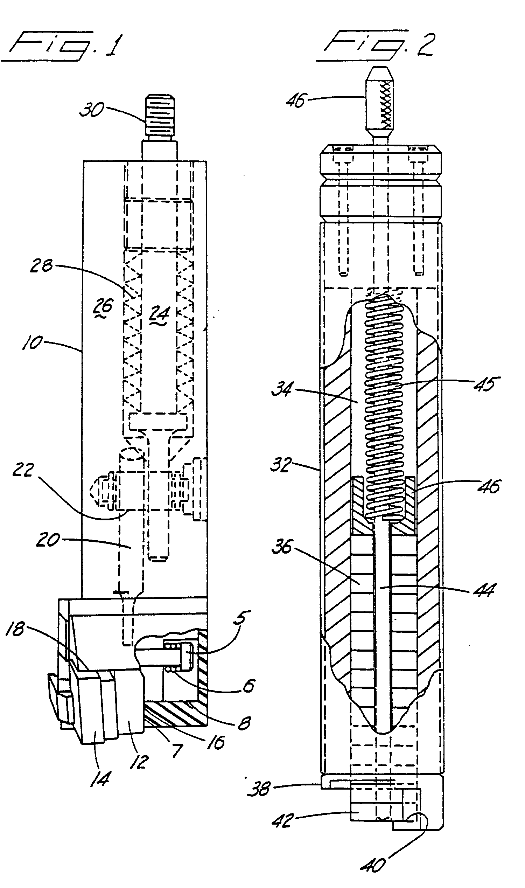

Referring to the drawings somewhat more in detail, what is shown in Figure 1 is a toolholder 10 having a movable insert seat 12 with an insert 14 seated theron. The movable insert seat 12 and the insert 14 are located in an insert pocket having a bottom wall 16 and a side wall 18. The insert seat 12 is connected to means 20 and engages pinion 22 so as to be reciprocably movable in a forwardly manner.

A reciprocably movable rod means 24 extends therethrough the shank 26 of the toolholder 10 and has a spring means 28 urging the rod means 24 to its forwardmost position in the shank 26 of the toolholder 10 so that the insert seat 12 is firmly held in its rearwardmost position in the insert pocket of the toolholder. The movable rod means 24 may have threaded means 30 on one end so as to be connected to a machine tool.

Also shown in Figure 1 is a shoulder-type screw 5 having a spring means 6 associated therewith that is connected to the bottom portion of the insert seat 12. Shoulder screw 5 and spring 6 hold the insert seat 12 against the shelf 7 of the toolholder as it slides in and out of the toolholder pocket. The shoulder screw 5 provides a positive stop against abutment 8 when the insert seat is moved to its outermost position.

What is shown in Figure 2 is an insert storage mechanism 32 having an insert storage area 34 for storing multiple, similarly-shaped inserts 36 in a stacked, face-to-face relationship. Inserts 36 are normally polygonally shaped when viewed in plan and have a central hole therethrough to aid in clamping the insert against the bottom wall 16 and the side wall 18 of the insert in the pocket of the toolholder 10.

The insert storage area 34 has an open end 38 that has at least one side open so that the inserts 36 may be removed from the insert storage area 34. The open end 38 has an abutment surface 40 that holds the endmost insert 42 from any longitudinal movement. Rod means 44 extends throughout the appropriate center line of the insert storage area 34, extending through the center holes in the inserts 36 and engaging the central hole of insert 42 so as to prevent any lateral movement of insert 42. Spring 45 and cap 46 provide a means for urging the stack of inserts 36 into engagement with the abutment surface 40. Reciprocal movable rod means 44 is also urged toward the abutment end 40, but may be pulled back by handle 46 so that insert 42 may be laterally removed from the insert mechanism through the open end 38.

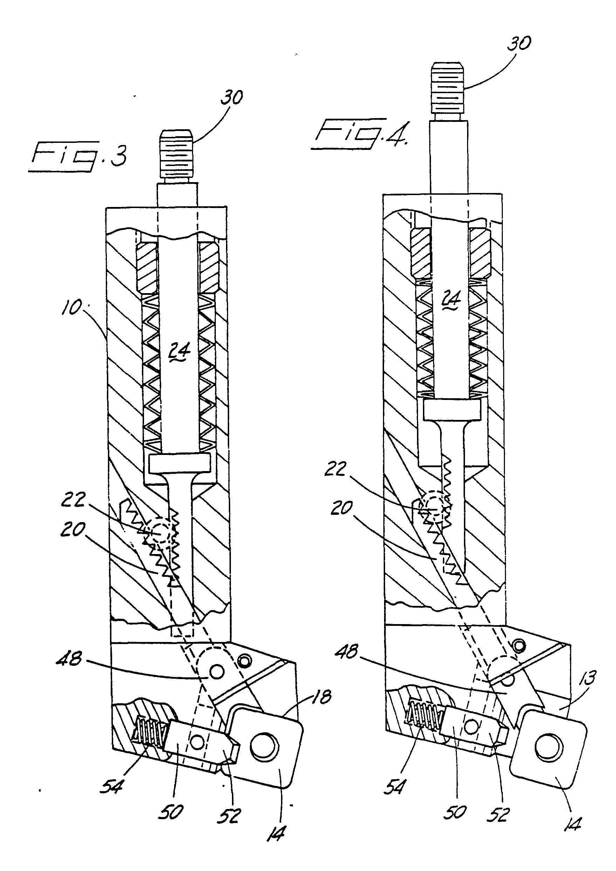

What is shown in Figure 3 is a plan view of the toolholder 10 having reciprocably movable rod means 24 with engagement means 30 on the end of the rod 24. Insert seat 12, shown in Figure 1, has a tongue 48 which connects with means 20 so as to engage the pinion 22. Rod 24 also engages the pinion 22, and it can be seen that the insert 14 is being firmly held against the side wall 18 of the insert pocket. The pivotal clamp means 50 is shown in the clamped position with a top wall insert contact portion 52 pressing downwardly on the top of the insert 14. Spring means 54 urges the pivotal arm 50 to pivot upwardly when the insert 14 is not engaged with the pivotal clamp 50.

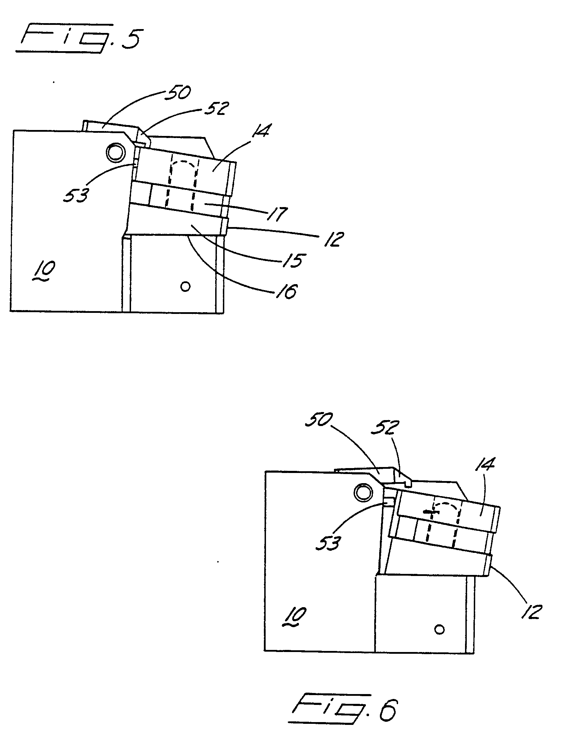

What is shown in Figure 4 is that the rod means 24 has been actuated rearwardly with engagement with end 30, thereby rotating the pinion 22 and causing rod 20 to move the tongue 48 and push the insert seat 12 out of the insert pocket 13. The insert 14 is still seated on the insert seat, and when in this position, may be removed so as to be replaced by another insert 42, shown in Figure 2. The pivotal arm 50 now has the top insert contact portion 52 rotated to its uppermost position by spring 54.

What is shown in Figure 5 is a front view of the toolholder 10, showing the insert seat 12 having a lowermost portion 15 and an uppermost portion 17. The insert 14 is seated on the uppermost portion 17 while portion 15 sits on the bottom wall 16 of the insert pocket. The toolholder is now in its clamped position, showing the pivotal arm 50 having contact portion 52 engaging the top of the insert 14 and pressing downwardly and also having a side finger 53 engaging the side wall portion of insert 14.

When in the clamped position, the insert 14 will be clamped and located between the bottom and side walls of the insert pocket and, also, will abut the side wall contact portion 53 of pivotal arm 50 while being pressed down by the top wall contact portion 52 of pivotal arm 50.

What is shown in Figure 6 is, again, an end view of the toolholder 10 showing the insert 14 in an unclamped position having the insert seat 12 moved out of the insert pocket and showing the pivotal arm 50 rotated to its uppermost position such that the top wall contact portion 52 does not engage insert 14. Further, the side wall contact portion 53 is also not engaging insert 14 and insert 14 may be removed from the toolholder.

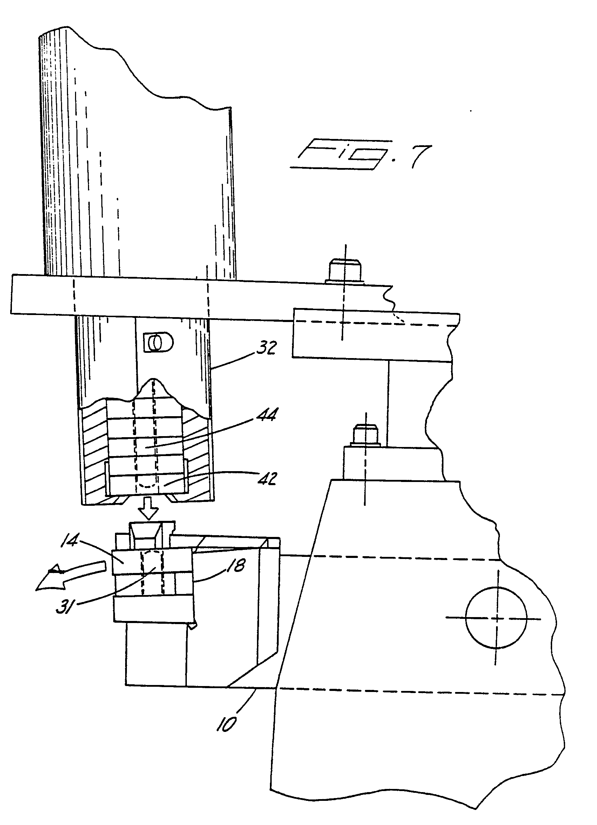

What is shown in Figure 7 is the insert cartridge 32 and the toolholder 10 being held by appropriate means so that the automatic changing of the insert 14 may be accomplished. With the insert cartridge 32 properly positioned above the toolholder 10, the insert 14 may be automatically changed. Proper positioning means that the movable rod 44 is positioned so that when it is lowered it will engage the central pin 31 on insert seat 12.

The central pin 31 on insert seat 12 serves to clamp the insert 14 against the side wall 18 in the insert pocket of toolholder 10. When the insert cartridge 32 is lowered into engagement with the insert seat, pin 31 will push movable rod means 44 upward in the insert storage chamber 24 so that it no longer engages the innermost central hole of the insert 42.

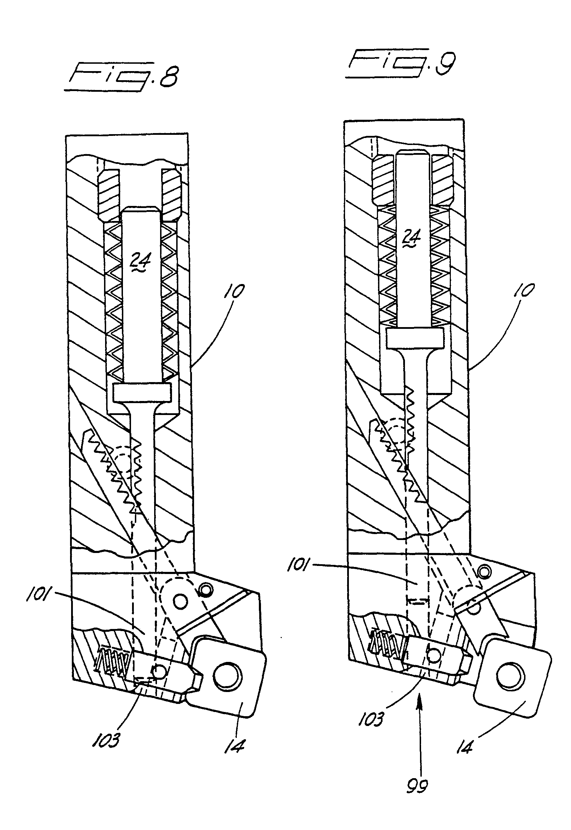

Shown in Figure 8 is toolholder 10, showing the drawbar 24 with the insert 14 in the clamped position. The drawbar 24 has a front end portion 101 that sits in a through hole that extends to the front part of the toolholder 10.

Through the through hole 103, the drawbar 24 may be actuated as is shown in Figure 9, such that the insert 14 is moved to the unclamped position. In this manner it may not be necessary for the toolholder to be actuated from the rear.

Rather, the insert may be clamped and unclamped from the front of the toolholder 10.

Modifications may be made within the scope of the appended claims.

## Claims

1. A toolholder (10), comprising:
(a) a shank (26);
(b) an insert pocket (13) on said shank (26) with a bottom wall (16);
(c) a slidable insert seat (12) in said insert pocket (13);
(d) a pin (31) extending upwardly from said insert seat (12) for engagement with a central hole in a cutting insert (14);
(e) means (20, 22, 24) for sliding said insert seat (12) along said bottom wall (16) between a first position in which the insert seat (12) is in the insert pocket (13) and a second position in which the insert seat (12) is slid out of the insert pocket (13); and
(f) clamping means (50) having an insert side wall contact portion (53);
characterized in that said clamping means comprises a pivotal clamp (50) along one side wall (18) of said pocket (13) having an insert top wall contact portion (52) in addition to said insert side wall contact portion (53), said pivotal clamp (50) being pivotally moved to a first condition in which its contact portions (52, 53) are respectively engaged with the side wall and top wall of the insert (14) when said insert seat (12) is slidably moved to its first position and being pivotally moved to a second condition in which its contact portions (52, 53) are respectively disengaged from the side wall and top wall of the insert (14) when said insert seat (12) is slidably moved to its second position.

2. The toolholder (10) according to Claim 1 wherein said sliding means includes a movable rod (24) extending through said toolholder shank (26) and means (20) connecting said rod (24) to said movable insert seat (12) and to said pivotal clamp (50) so that when said rod (24) is moved in one direction said insert seat (12) is moved to its first position and said pivotal clamp (50) is pivoted to its first condition and when said rod is moved in an opposite direction said insert seat (12) is moved to its second position and said pivotal clamp is pivoted to its second condition.

3. The toolholder (10) according to Claim 2 wherein said rod connecting means (20, 22) is a rack and pinion arrangement.

4. The toolholder (10) according to Claim 2 further including means (28) for biasing said rod (24) in the one direction.

5. A method of replacing a cutting insert (14) carried by an insert seat (12) in an insert pocket (13) of a toolholder (10), comprising the steps of:
(a) moving a movable rod assembly (20, 22, 24) connected to said insert seat (12) against a biasing force from a first position in which the cutting insert (14) is disposed within the insert pocket (13) and a pivotal clamp (50) is in a first condition clamping the insert (14) in the pocket (13) to a second position in which the insert seat (12) and insert (14) therewith is moved away of the pocket (13) and the pivotal clamp (50) is pivotally moved to a second condition unclamping the insert (14);

(b) removing the unclamped insert (14) from the insert seat (12);

(c) positioning an insert cartridge (32) having a movable central rod (44) to which are engaged one or more replacement inserts (36) relative to the upstanding pin (31) of the insert seat (12);

(d) moving the insert cartridge (32) toward the insert seat (12) so that the movable central rod (44) contacts the pin (31) whereby upon further movement the pin (31) pushes the movable central rod (44) whereby the next replacement insert (36) is engaged by the pin (31);

(e) moving the movable rod assembly (20, 22, 24) from its second position to its first position so that the insert seat (12) is moved into the insert pocket (13) and the pivotal clamp (50) is pivoted to its first condition clamping the insert (14); and

(f) moving the insert cartridge (32) away from the insert seat (12).

6. An insert storage magazine (32) for delivering a cutting insert (14, 36, 42) to an insert seat (12) with a central poin (31) comprising:

(a) an insert storage chamber (34) for holding multiple, similarly-shaped cutting inserts (36) having a central hole therethrough in a face-to-face stacked relationship; and

(b) means (45) for urging said stack of inserts (36) in their direction of stacking into an abutting relationship with an abutment surface (40); characterized by further comprising:

(c) an end (38) to said storage chamber (34) open on at least one side, the abutment surface (40) being supported on said end;

(d) a central rod (44) extending in said storage chamber (34) for engagement with the central holes of said inserts (36), thus permitting alignment of said inserts (36) with the central pin (31) of an insert seat (12);

(e) said rod (44) being capable of longitudinal reciprocal movement, whereby means (45) urge said rod toward said open end (38) of the storage chamber (34) so as to selectively engage the endmost insert (42) for preventing lateral movement of said endmost insert (42).

**Patentansprüche**

1. Ein Werkzeughalter (10) versehen mit:
(a) einem Schaft (26);
(b) einer Einsatztasche (13) an diesem Schaft (26), die eine Bodenwand (16) aufweist;
(c) einem gleitenden Einsatz-Sitz (12) in dieser Einsatz-Tasche (13);
(d) einem Stift (31), der sich von dem Einsatz-Sitz (12) ausgehend nach oben erstreckt, um in Eingriff mit einem zentralen Loch in einem Schneideinsatz (14) zu gelangen.
(e) Mitteln (20, 22, 24) zur Bewegung dieses Einsatz-Sitzes (12) längs der Bodenwand (16) zwischen einer ersten Stellung, in welcher der Einsatz-Sitz (12) sich in der Einsatztasche (13) befindet, und einer zweiten Stellung, in der der Einsatz-Sitz (12) aus der Einsatztasche (13) herausgeschoben ist; und

(f) einer Klemmeinrichtung (50), die einen Einsatz- Seitenwand-Berührungsteil (53) aufweist; dadurch gekennzeichnet, daß die Klemmeinrichtung eine schwenkbare Klammer (50) längs einer Seitenwand (18) der Tasche (13) aufweist, die zusätzlich zu dem Einsatz-Seitenwand-Berührungsteil (53) einen Einsatz-Deckenwand-Berührungsteil (52) hat, wobei die schwenkbare Klammer (50) in eine erste Stellung geschwenkt wird, in welcher ihre Berührungsteile (52, 53) mit der Seitenwand bzw. mit der Deckenwand des Einsatzes (14) in Eingriff gelangen, wenn der Einsazt-Sitz (12) gleitend in seine erste Lage bewegt wird, und in eine zweite Stellung geschwenkt wird, in welcher ihre Berührungsteile (52, 53) von der Seitenwand bzw. von der Deckenwand des Einsatzes (14) entfernt sind, wenn der Einsatz-Sitz (12) gleitend in seine zweite Lage bewegt wird.

2. Der Werkzeughalter (10) nach Anspruch 1, in welchem die Gleitvorrichtung eine bewegliche Stange (24) umfaßt, die sich durch den Werkzeughalterschaft (26) erstreckt, und Mittel (20) aufweist, welche die Stange (24) mit dem beweglichen Einsatz-Sitz (12) und der schwenkbaren Klammer (50) verbinden, so daß bei Bewegung der Stange (24) in einer Richtung der Einsatz-Sitz (12) in seine erste Stellung bewegt wird und die schwenkbare Klammer (50) in ihre erste Lage geschwenkt wird und bei Bewegung der Stange in eine entgegengesetzte Richtung der Einsatz-Sitz (23) in seine zweite Stellung und die schwenkbare Klammer in ihre zweite Lage geschwenkt wird.

3. Der Werkzeughalter (10) nach Anspruch 2, in welchem die Stangenverbindungseinrichtung (20, 22) eine Zahnstangen- und Ritzel-Anordnung ist.

4. Der Werkzeughalter (10) nach Anspruch 2, ferner Mittel (28) enthaltend zum Beaufschlagen der Stange (24) in die eine Richtung.

5. Ein Verfahren zum Ersetzen eines Schneideinsatzes (14) an einem Einsatz-Sitz (12) in einer Einsatztasche (13) eines Werkzeughalters (10), welches die folgenden Schritte umfaßt:

(a) Bewegen einer beweglichen Stangeneinrichtung (20, 22, 24), die mit dem Einsatz-Sitz (12) verbunden ist, gegen eine Vorspannungskraft von einer ersten Stellung, in welcher der Schneideinsatz (14) sich innerhalb der Einsatztasche (13) befindet und eine schwenkbare Klammer (50) in einer ersten Lage ist, wobei der Einsatz (14) in der Tasche eingespannt wird, in eine zweite Stellung, in welcher der Einsatz-Sitz (12) und mit ihm der Einsatz (14) von der Tasche (13) wegbewegt und die schwenkbare Klammer (50) in eine zweite Lage geschwenkt wird, wobei der Einsatz (14) gelöst wird;

(b) Entfernen des gelösten Einsatzes (14) von dem Einsatz-Sitz (12);

(c) Instellungbringen eines Einsatz-Lagermagazins (32), das eine bewegliche Mittelstange (44) aufweist, mit der ein oder mehrere Ersatzeinsätze (36) in Ausrichtung zum senkrecht stehenden Stift (31) des Einsatz-Sitzes (12) in Eingriff stehen;

(d) Bewegen des Einsatz-Lagermagazins (32) zum Einsatz-Sitz (12), so daß die bewegliche Mittelstange (44) den Stift (31) berührt, wodurch bei Weiterbewegung der Stift (31) die bewegliche Mittelstange (44) anstößt, wodurch der nächste Ersatzeinsatz (36) von dem Stift (31) ergriffen wird;

(e) Bewegen der beweglichen Stangeneinrichtung (20, 22, 24) von ihrer zweiten Stellung in ihre erste Stellung, so daß der Einsatz-Sitz (12) in die Einsatztasche (13) hineinbewegt wird and die schwenkbare Klammer (50) in ihre erste Stellung geschwenkt wird, in der sie den Einsatz (14) einspannt; und

(f) Wegbewegen des Einsatz-Lagermagazins (23) von dem Einsatz-Sitz (12).

6. Ein Einsatz-Lagermagazin (32) zur Abgabe eines Schneideinsatzes (14, 36, 42) an einen Einsatz-Sitz (12) mit einem zentralen Stift (31), umfassend:

(a) eine Einsatz-Lagerkammer (34) zum Halten einer Vielzahl von gleichgestalteten Schneideinsätzen (36), die ein mittig durch sie hindurchführendes Loch aufweisen, in Stapelanordnung Stirnfläche gegen Stirnfläche; und

(b) Mittel (45) zum Drücken des Stapels von Einsätzen (36) in ihrer Staplerichtung in Anlage an eine Anlagefläche (40);
dadurch gekennzeichnet, daß es ferner umfaßt:

(c) ein Ende (38) an dieser Lagerkammer (34), das wenigstens an einer Seite offen ist, wobei die Anlagefläche auf diesem Ende aufliegt;

(d) eine Mittelstange (44), die sich in die Lagerkammer (34) hineinerstreckt, um mit den mittigen Löchern der einsätze (36) in Eingriff zu kommen, wodurch eine Ausrichtung der Einsätze (36) mit dem zentralen Stift (31) eines Einsatz-Sitzes (12) ermöglicht wird;

(e) wobei die Stange (44) in Längsrichtung hin und her bewegt werden kann, und Mittel (45) die Stange gegen das offene Ende (38) der Lagerkammer (34) drücken, um abwechselnd in den äußersten Einsatz (42) einzugreifen, damit eine seitliche Bewegung des am äußersten Ende befindlichen Einsatzes (42) verhindert wird.

**Revendications**

1. Porte-outil (10) comprenant un fût (26), une poche à plaquette (13) sur ledit fût (26), ayant une paroi de fond (16); un siège de plaquette (12) coulissant dans ladite poche à plaquette (13); un goujon (31) s'étendant vers le haut depuis ledit siège de plaquette (12) pour s'engager dans un trou central d'une plaquette (14); des moyens (20, 22, 24) pour faire coulisser ledit siège de plaquette (12) le long de ladite paroi de fond (16) entre une première position dans laquelle le siège de plaquette (12) est dans la poche à plaquette (13) et une seconde position dans laquelle le siège de soupape (12) est sorti par coulissement de la poche à plaquette (13) et un moyen de blocage (50) ayant une portion (53) de contact avec une paroi de plaquette,
caractérisé par le fait que ledit moyen de blocage comprend une pièce de blocage pivotante (30) le long d'une paroi latérale (18) de ladite poche (13), ayant une portion de contact avec une paroi supérieure de plaquette (52) en plus de ladite portion de contact (53) avec la paroi latérale de plaquette, ladite pièce de blocage pivotante (50) étant amenée par pivotement dans une première situation dans laquelle ses portions de contact (52, 53) sont respectivement en prise avec la paroi latérale et la paroi supérieure de la plaquette (14) quand ledit siège de plaquette (12) est amené par coulissement dans sa première position et étant amené par pivotement dans une seconde situation dans laquelle ses portions de contact (52, 53) sont respectivement dégagées de la paroi latérale et de la paroi supérieure de la plaquette (14) quand ledit siège de plaquette (12) est amené par coulissement dans sa seconde position.

2. Porte-outil selon la revendication 1, dans lequel ledit moyen de coulissement comporte une tige mobile (24) traversant ledit fût (26) et des moyens (20) reliant cette tige (24) au dit siège de plaquette (12) mobile et au dit organe de blocage pivotant (50) de telle sorte que lorsque ladite tige (24) est déplacée dans une première direction le siège de plaquette (12) est amené à sa première position et ledit organe de blocage pivotant (50) est amené par pivotement dans sa première situation et, quand ladite tige est déplacée dans la direction opposée, ledit siège de plaquette (12) est amené dans sa seconde position et ledit organe de blocage pivotant est amené par pivotement dans sa seconde situation.

3. Porte-outil selon la revendication 2, dans lequel les moyens (20, 22) reliant la tige au siège de plaquette sont constitués par un ensemble pignon-crémaillère.

4. Porte-outil selon la revendication 2, comprenant en outre des moyens (28) pour rappeler ladite tige (24) dans la première direction.

5. Procédé pour remplacer une plaquette de coupe (14) portée par un siège de plaquette (12) dans une poche à plaquette (13) d'un porte-outil (10) selon lequel:

a) on déplace un ensemble à tige mobile (20, 22, 24) relié audit siège de soupape (12), à l'encontre d'une force de reppel, d'une première position, dans laquelle la plaquette de coupe (14) est disposée dans la poche à plaquette (13) et un organe de blocage pivotant (50) est dans une première situation bloquant la plaquette (14) dans la poche (13), dans une seconde position, dans laquelle le siège de plaquette (12), avec sa plaquette (14), est sorti de la poche (13) et l'organe de blocage pivotant (50) est amené par pivotement dans une seconde situation débloquant la plaquette (14);

b) on enlève la plaquette (14) débloquée du siège de plaquette (12);

c) on positionne une cartouche de plaquette (32) ayant une tige centrale (44) sur laquelle sont montées une ou plusieurs plaquettes de rechange (36), par rapport au téton (31) droit du siège de soupape (12);

d) on déplace la cartouche de plaquettes (32) vers le siège de plaquette (12) de manière que la tige centrale mobile (44) vienne en contact avec le téton (31) de sorte que par poursuite du déplacement le téton (31) pousse la tige centrale (44) et que la plaquette de rechange suivante (36) est engagée par le téton (31);

e) on amène l'ensemble à tige mobile (20, 22, 24) de sa seconde position à sa première position de sorte que le siège de plaquette (12) est introduit dans la poche à plaquette (13) et l'organe de blocage pivotant (50) est amené par pivotement dans sa première situation bloquant la plaquette (14); et

f) on écarte la cartouche à plaquettes (32) du siège de plaquette (12).

6. Magasin de stockage de plaquettes (32) pour livrer une plaquette de coupe (14, 36, 42) à un siège de plaquette (12) ayant un téton central (31), comprenant

a) une chambre de stockage de plaquette (34) pour contenir de multiples plaquettes de coupe (36) de formes similaires, présentant respectivement des trous centraux traversants superposés face-à-face, et

b) des moyens (45) pour rappeler ledit stock de plaquettes (36) dans leur direction de stockage, en position de butée contre une surface de butée (40),

caractérisé par le fait qu'il comprend, en outre,

c) une extrémité (38) à ladite chambre de stockage (34) ouverte au moins d'un côté, la surface de butée (40) étant supportée sur ladite extrémité,

d) une tige centrale (44) s'étendant dans ladite chambre de stockage pour s'engager dans les trous centraux desdites plaquettes (36) permettant ainsi l'alignement desdites plaquettes (36) avec le téton central (31) d'un siège de plaquette (12),

e) ladite tige (44) étant capable d'effectuer un mouvement d'aller et retour longitudinal grâce à quoi les moyens (45) rappellent ladite tige vers ladite extrémité ouverte (38) de la chambre de stockage (34') de manière qu'elle s'engage sélectivement dans la plaquette d'extrémité (42) et en empêche tout mouvement latéral.

Fig.1

Fig.2

Fig.3

Fig.4.

Fig. 5

Fig. 6

FIG. 7

FIG.8

FIG.9